# EUROPÄISCHE PATENTANMELDUNG

(11) **EP 2 218 365 A1**
(43) Veröffentlichungstag der Anmeldung: **18.08.2010**
(21) Anmeldenummer: 10151792.8
(22) Anmeldetag: 27.01.2010
(51) Int. Cl.: A47F 7/28

(54) **Halteeinrichtung für Kleinbehälter**

(30) Priorität: 11.02.2009 DE 102009008512
(71) Anmelder: Metallwarenfabrik Marktoberdorf GmbH & Co. KG, 87616 Marktoberdorf (DE)
(72) Erfinder: Schneider, Paul, 87471, Durach (DE)
(74) Vertreter: Tiesmeyer, Johannes

(57) **Zusammenfassung**

Die vorliegende Erfindung betrifft eine Halteeinrichtung für Kleinbehälter (66) mit Randvorsprung (68), insbesondere für Getränkepulverkapsein, Kaffeesahneeinzelportionen, Zitronensafteinzelportionen und dergleichen, wobei die Halteeinrichtung (10, 10') wenigstens ein Halteelement (12, 12') umfasst mit wenigstens einer länglichen, schlitzartigen Öffnung (14, 14'), in welcher der Randvorsprung (68) eines betreffenden Kleinbehälters (66) wenigstens teilweise aufnehmbar und festklemmbar ist, derart, dass ein in der Öffnung (14, 14') festgeklemmter Kleinbehälter (66) vom Halteelement (12, 12') vorsteht, wobei die schlitzartige Öffnung (14, 14') durch einen geschlossenen Öffnungsrand mit zwei sich gegenüberliegenden Längsrändern (56, 58) und zwei die beiden Längsränder (56, 58) verbindenden Seitenrändern (60, 62) begrenzt ist, und wobei die beiden Längsränder (56, 58) der Öffnung (14, 14') wenigstens teilweise nicht parallel zueinander verlaufen.

## Beschreibung

Die Erfindung betrifft eine Halteeinrichtung für Kleinbehälter mit Randvorsprung, insbesondere für Getränkepulverkapseln, Kaffeesahneeinzelportionen, Zitronensafteinzelportionen und dergleichen, wobei die Halteeinrichtung wenigstens ein Halteelement umfasst mit wenigstens einer länglichen, schlitzartigen Öffnung, in welcher der Randvorsprung eines betreffenden Kleinbehälters wenigstens teilweise aufnehmbar ist, derart, dass ein in der Öffnung mittels seines Randvorsprungs gehaltener Kleinbehälter vom Halteelement vorsteht, wobei die schlitzartige Öffnung durch einen geschlossenen Öffnungsrand mit zwei sich gegenüberliegenden Längsrändern und zwei die beiden Längsränder verbindenden Seitenrändern begrenzt ist.

Die angesprochenen Getränkepulverkapseln können beispielsweise Kaffeepulver enthaltende Aluminiumkapseln sein, welche zum Brühen einer Tasse Kaffee in eine entsprechende Espressomaschine eingesetzt werden können. Ein Beispiel für derartige Kaffeepulverkapseln sind die unter dem Markennamen Nespresso im Handel erhältlichen Kapseln. Allerdings ist die Halteeinrichtung so gestaltet, dass jede Art von Kleinbehälter mit einem Randvorsprung, beispielsweise Kaffeesahneeinzelportionen, in den schlitzartigen Öffnungen aufnehmbar und festklemmbar sind. Ferner ist es auch denkbar, dass die Halteeinrichtung für andere Gegenstände, welche einen Randvorsprung aufweisen und von den Dimensionen solchen angesprochenen Kleinbehältern entsprechen, mittels der Halteeinrichtung gehalten und präsentiert werden können.

Eine gattungsgemäße Halteeinrichtung ist aus der NL 1003954 C bekannt. Bei dieser Halteeinrichtung hintergreift ein oberer Längsrand einen nach oben gerichteten Randvorsprung eines Deckels eines in der Halteeinrichtung aufgenommenen Behälters. Die Öffnung ist so groß dimensioniert, dass der gesamte Behälter darin aufnehmbar ist, wobei am unteren Längsrand der Öffnung der Behälter mit seinem Boden abgestützt ist. Die Öffnung ist optimiert für größere Behälter mit Deckel, wobei am Deckel ein nach oben gerichteter Randvorsprung ausgebildet sein muss, um den Behälter in der Öffnung halten zu können.

Demgegenüber ist es Aufgabe der Erfindung, eine gattungsgemäße Halteeinrichtung für beliebige kleine Behälter mit Randvorsprüngen zu schaffen.

Hierzu wird vorgeschlagen, dass die beiden Längsränder der Öffnung wenigstens teilweise nicht parallel zueinander verlaufen, wobei wenigstens einer der Längsränder der Öffnung, vorzugsweise der obere Längsrand, bezogen auf ein aufgestelltes bzw. aufgehängtes Halteelement, wenigstens einen zur Öffnung hin konvex ausgebildeten Randabschnitt aufweisen kann, derart, dass durch den konvexen Randabschnitt die lichte Weite der Öffnung verringert wird, und dass die Längsränder eine klemmende Kraft auf den Randvorsprung ausüben. Eine derartige Ausgestaltung ermöglicht das ausreichende Festklemmen des Randvorsprungs des Kleinbehälters, so dass der Kleinbehälter nicht selbsttätig aus der schlitzartigen Öffnung herausrutscht. Die derartig ausgebildete schlitzartige Öffnung bildet somit eine Art Herausfallsicherung für den Kleinbehälter. Die abschnittsweise Verringerung der lichten Weite führt zu einem sicheren Festklemmen des Kleinbehälters, wobei die konvexe Ausgestaltung des Längsrandes das Einführen und Herausziehen des Kleinbehälters erleichtert. Ferner wird durch eine derartige konvexe Ausgestaltung des oberen Längsrandes der Randvorsprung des Kleinbehälters im Wesentlichen punktuell festgeklemmt, nämlich an der Stelle, wo die schlitzartige Öffnung ihre geringste lichte Weite aufweist, also dort, wo sich der obere und der untere Längsrand am nächsten kommen. Die Ausgestaltung der Öffnung ermöglicht es, dass die Kleinbehälter mit ihrem Randvorsprung einfach in die schlitzartige Öffnung eingeführt werden können und leichtgängig wieder aus einer derartigen Öffnung herausgezogen werden können.

Das Halteelement ist vorzugsweise derart ausgestaltet, dass es aufhängbar oder aufstellbar ist, und zwar derart, dass eine die Öffnungen aufweisende Fläche des Halteelements zu einer horizontalen Ebene, insbesondere Aufstellebene, geneigt oder im Wesentlichen orthogonal angeordnet ist. Die schlitzartigen Öffnungen verlaufen dabei vorzugsweise im Wesentlichen parallel zur horizontalen Ebene, so dass ein mittels seines Randvorsprungs in einer Öffnung aufgenommener Kleinbehälter aufgrund der Schwerkraft um den unteren Längsrand der betreffenden Öffnung verkippt wird und am oberen Längsrand der Öffnung anliegt, so dass der Kleinbehälter aufgrund der wirkenden Kräfte in der schlitzartigen Öffnung verbleibt, unabhängig davon, ob die Halteeinrichtung bewegt wird, besipielsweise von einem Tisch auf eine Küchenablagefläche.

Vorzugsweise ist die lichte Weite der schlitzartigen Öffnung in einem mittleren Bereich der Öffnung kleiner als in Randbereichen der Öffnung. Bei einer derartigen Ausgestaltung weist die Öffnung einen mittig angeordneten konvexen Randabschnitt auf, so dass ein Festklemmen des Kleinbehälters hauptsächlich im mittleren Abschnitt der Öffnung erfolgt, was zu einer sicheren Befestigung des Kleinbehälters in der schlitzartigen Öffnung führt, aber auch das Einführen und Herausziehen des Kleinbehälters nicht behindert.

Die Halteeinrichtung kann mehrere schlitzartige Öffnungen aufweisen, die insbesondere regelmäßig verteilt am Halteelement vorgesehen sind, wobei die Öffnungen vorzugsweise in der Art einer Matrix mit n Zeilen und m Spalten angeordnet sind, wobei das Produkt von n und m der Anzahl Öffnungen im Halteelement entspricht.

Das Vorsehen von mehreren Öffnungen ermöglicht das Aufbewahren und Präsentieren von einer entsprechenden Anzahl von Kleinbehältern an einem Halteelement. Dabei ist es auch denkbar, dass die Halteeinrichtung eine Größe aufweist, so dass es möglich wird, mit in die Öffnungen eingesetzten Behältern eine Art Muster anzuordnen, beispielsweise zu Werbezwecken oder dergleichen. Aufgrund der bevorzugten Matrixanordnung der Öffnungen kann somit ein Muster bzw. Bild in der Art eines Rasterbildes dargestellt werden.

Gemäß einer bevorzugten Ausführungsform weist das Halteelement im Bereich seines oberen Randes Aufhängemittel auf zum Befestigen der Halteeinrichtung an einer Wand oder zum Einhängen der Halteeinrichtung in einer an der Wand bereits befestigten Aufhängschiene. Dabei umfasst das Halteelement an seinem unteren Randbereich einen Abstützabschnitt zur Abstützung der aufgehängten Halteeinrichtung an der Wand. In einer derartigen Ausführungsform mit Aufhängemittel kann die Halteeinrichtung beispielsweise in einem Küchensystem integriert werden, das aus einer an einer Wand montierten Aufhängeschiene besteht, an welcher unterschiedliche Küchengeräte bzw. Küchenaccessoirs aufgehängt werden können. Eine derartige hängende Aufbewahrung der Halteeinrichtung ist sehr Platz sparend und benötigt keine Stellfläche auf einem Tisch oder einer Ablagefläche in einer Küche. Bevorzugt sind bei einer derartigen Ausführungsform der Abstützabschnitt und die Aufhängemittel durch Umbiegen des Halteelements gebildet, so dass die Aufhängemittel in der Form eines Hakens ausgebildet sind und dass der Abstützabschnitt in einem derartigen Winkel zum Halteelement umgebogen ist, dass er einen gewünschten Minimalabstand zur Wand gewährleistet, so dass die Halteeinrichtung im Wesentlichen parallel zur Wand ausgerichtet ist. Ferner verhindert der Abstützabschnitt ein Ausweichen der Halteeinrichtung zur Wand hin beispielsweise beim Bestücken des Halteelements mit Kleinbehältern.

Gemäß einer anderen Ausführungsform umfasst die Halteeinrichtung mehrere miteinander verbundene Halteelemente, die derart zueinander ausgerichtet sind, dass die Halteeinrichtung freistehend auf einem Untergrund, insbesondere Tisch oder dergleichen, aufstellbar ist. Eine derartige Halteeinrichtung kann beispielsweise durch zwei miteinander verundene und winklig zueinander ausgerichtete Halteelemente gebildet sein, wobei der Winkel derart gewählt wird, dass die Halteeinrichtung auf den Rändern der winklig zueinander ausgerichteten Halteelemente orthogonal zu einer Aufstellebene angeordnet werden kann. Es ist dabei denkbar, dass die Verbindung zwischen den mehreren Halteelementen entweder fest vorgegeben ist oder auch eine Art Scharnier aufweist, so dass eine bewegliche Verbindung zwischen benachbarten Halteelementen vorliegt. Alternativ zu mehreren miteinander verbundenen Halteelementen ist es auch denkbar, dass ein Halteelement in seinem unteren Bereich eine Art Aufstellmittel bzw. Aufstellfuß umfasst, so dass ein einzelnes Halteelement freistehend aufgestellt werden kann.

Vorzugsweise sind die Halteelemente als Teile eines einstückigen Halteelementverbunds ausgebildet, der zu einer Halteeinrichtung mit mehreren Halteelementen umgebogen werden kann, derart, dass zwei Halteelemente durch eine Biegekante voneinander getrennt sind. Bei einer derartigen Ausführungsform können beispielsweise aus einem sehr großen Stück Blech, das mit den mehreren schlitzartigen Öffnungen versehen ist, geeignete Halteelementverbundstücke herausgetrennt werden und anschließend so gebogen werden, dass eine Halteeinrichtung der gewünschten Form gebildet werden kann.

Gemäß einer bevorzugten Weiterbildung umfasst die Halteeinrichtung wenigstens drei Halteelemente, die derart zueinander angeordnet sind, dass eine rohrartige Halteeinrichtung gebildet wird, wobei die Halteelemente die Begrenzungswände des Rohres bilden und wobei ein Kleinbehälter von der Rohraußenseite her in eine Öffnung in einem der Halteelemente einführbar ist.

Eine derartige rohrartige Ausgestaltung der Halteeinrichtung ermöglicht das freie Aufstellen des Rohres auf einem seiner Stirnenden, wobei die rohrartige Ausgestaltung einen stabilen Stand des Rohres ermöglicht.

Vorzugsweise weist die Halteeinrichtung vier Halteelemente auf, von denen immer zwei benachbarte im rechten Winkel zueinander angeordnet sind, derart, dass die vier Halteelemente eine im Querschnitt rechteckige, vorzugsweise quadratische, rohrartige Halteeinrichtung bilden.

Ferner wird vorgeschlagen, dass die rohrartig ausgebildete Halteeinrichtung an ihrem unteren Ende eine Basis umfasst, mit der sie drehbar um die Rohrlängsachse mit einem zugehörigen Standfuß gekoppelt oder koppelbar ist, derart, dass das Rohr einen auf der Basis stehenden und relativ zum Standfuß drehbaren Halteturm bildet.

Hierzu wird weiterbildend vorgeschlagen, dass die Halteelemente der rohrartigen Halteeinrichtung derart dimensioniert sind, dass im Halteturm wenigstens eine vorzugsweise quaderartige Kleinbehältervorratspackung aufnehmbar ist, wobei der Halteturm vorzugsweise an seinem oberen von der Basis abgewandten Ende einen abnehmbaren Verschluss, insbesondere Deckel aufweist.

Die Ausgestaltung der Halteeinrichtung als Halteturm ermöglicht einerseits auf dessen Außenseite das Anordnen von einzelnen Kleinbehältern in den schlitzartigen Öffnungen, so dass diese von dort in einfacher Weise herausgezogen und verwendet werden können. Auf der Innenseite des rohrartigen Turms können Vorratspackungen von Kleinbehältern untergebracht sein, so dass die turmartige Halteeinrichtung einfach mit Kleinbehältern wieder bestückt werden kann, wenn beispielsweise alle Öffnungen eines Halteelements, also eine Turmseite, leer sind bzw. ist. Ein derartiger, insbesondere drehbarer Turm hat auch den Vorteil, dass auf unterschiedlichen Seiten des Turmes, also an den verschiedenen den Turm bildenden Halteelementen, unterschiedliche Sorten von Kleinbehältern angeordnet werden können. Beispielsweise könnten auf drei Seiten eines quadratischen Turmes drei unterschiedliche Kaffeesorten in Kleinbehältern angeordnet sein und auf der vierten Seite könnten Kaffeesahneeinzelportionen in die Öffnungen eingeführt sein. Ferner ist ein derartiger Turm auch einfach samt seiner Bestückung mit Kleinbehältern und samt den im Turm aufgenommenen Vorratspackungen von einer Stelle zu einer anderen verschiebbar, was insgesamt die Handhabung vereinfacht. Die Drehung des Turmes ermöglicht ein einfaches Auswählen eines bestimmten Kleinbehälters, so dass der gewünschte Kleinbehälter beispielsweise von einer Rückseite nach vorne gedreht werden kann, um den Kleinbehälter einfach herausziehen zu können.

Das Halteelement der Halteeinrichtung ist vorzugsweise eine im Wesentlichen ebene Fläche oder eine gekrümmte bzw. gewölbte Fläche. Die ebene Fläche ist derzeit als bevorzugte Ausführung zu sehen, allerdings bietet die Ausführung des Halteelements als gekrümmte bzw. gewölbte Fläche noch weitere Möglichkeiten im Hinblick auf unterschiedliche Designs einer derartigen Halteeinrichtung. Insbesondere ist es möglich, ein bogenförmiges Halteelement zu bilden, das alleine stabil aufstellbar ist.

Gegenstand der Erfindung ist ferner eine Präsentationsanordnung umfassend eine Kombination aus einer Halteeinrichtung, insbesondere nach einem der Ansprüche 1 - 16, und einer Vielzahl von Kleinbehältern mit Randvorsprung, insbesondere für Getränkepulverkapseln und dergleichen, wobei die Halteeinrichtung wenigstens ein Halteelement umfasst mit einer Vielzahl von länglichen, schlitzartigen Öffnungen, wobei die Kleinbehälter mit ihren Randvorsprüngen in den schlitzartigen Öffnungen hängend aufgenommen sind, derart, dass sie vom Halteelement nach außen vorstehen.

Eine solche Präsentationsanordnung eignet sich insbesondere als Display für Getränkepulverkapseln, z. B. Kaffeepulverkapseln zur Verkaufsförderung in einem Geschäft. Dabei ist es auch möglich, dass die Halteeinrichtung aus einem Karton oder einem Kunststoff hergestellt ist und die schlitzartigen Öffnungen z. B. einfache Schlitzform haben. Eine solche Präsentationsanordnung kann auch Gegenstand einer Verkaufspackung für solche Getränkepulverkapseln sein. Sie erlaubt eine optisch ansprechende Präsentation der Getränkepulverkapseln sowohl im Geschäft als auch beim Kunden zu Hause. Der Kunde hat bequemen Zugriff auf jede der Getränkepulverkapseln, die an einer Außenseite der Halteeinrichtung nach außen vorstehen. Insbesondere im Falle von Getränkekapseln unterschiedlicher Farben ergibt sich ein dekoratives Bild der Präsentationsanordnung und eine sehr übersichtliche Darbietung der Getränkepulverkapseln.

Die Erfindung wird nachfolgend unter Bezugnahme auf die anliegenden Figuren beispielhaft und nicht einschränkend anhand mehrerer Ausführungsformen beschrieben.
- Fig. 1: zeigt in den Teilfiguren a) bis c) eine Halteeinrichtung mit einem einzigen Halteelement, wobei in Fig. 1a) nur eine Vorderansicht der Halteeinrichtung gezeigt ist, in Fig. 1b) eine seitliche Drauf-sicht entsprechend dem Pfeil I der Fig. 1a), und Fig. 1c) eine Vergrößerung des in Fig. 1b) eingekreisten Bereichs ist.
- Fig. 2: zeigt in den Teilfiguren a) bis c) ein Halteelement (Fig. 2a)), einen Halteelementverbund (Fig. 2b)) und eine Draufsicht auf den gebogenen Halteelementverbund zu einem quadratischen Rohr (Fig. 2c)).
- Fig. 3: zeigt die Verwendung des Halteelementverbunds gemäß Fig. 2c) als Halteturm, welcher drehbar auf einem Sockel angeordnet ist, wobei die Fig. 3a) eine seitliche Draufsicht und Fig. 3b) eine Schnittansicht entsprechend der Schnittlinie III-III darstellt.
- Fig. 4: zeigt in der Teilfigur 4a) eine Teilschnittdarstellung entsprechend der Schnittlinie IV-IV der Fig. 3a), und in der Fig. 4b) eine Draufsicht auf den Sockel von unten entsprechend dem Pfeil IVb) der Fig. 3a).
- Fig. 5a): zeigt schematisch und stark vergrößert eine schlitzartige Öffnung eines Halteelements, beispielsweise der in Fig. 2b) gestrichelt eingekreisten Öffnung, die mit V gekennzeichnet ist.
- Fig. 5b): zeigt schematisch die Öffnung der Fig. 5a) mit einem darin aufgenommenen, gestrichelt dargestellten Kleinbehälter.

- Fig. 5c): zeigt zwei vereinfachte schematische Schnittdarstellungen entsprechend den Schnittlinien Va und Vb der Fig. 5a) bzw. 5b).
- Fig. 5d): zeigt eine Schnittansicht entsprechend der Schnittlinie Vd-Vd der Fig. 5b).
- Fig. 6: zeigt in den Teilfiguren a) und b) zwei andere Ausführungsformen in schematischer Schnittdarstellung von anderen Ausführungsformen rohrartiger Halteeinrichtungen.
- Fig. 7: zeigt schematisch eine Ausführungsform einer Halteeinrichtung mit Standfuß, wobei das Halteelement gekrümmt ist, wobei es mit zunehmendem Abstand vom Standfuß einen größeren Abstand zu einer Vertikalebene aufweist.
- Fig. 8: zeigt schematisch eine andere Ausführungsform einer Halteeinrichtung aus einem Halteelement, wobei das Halteelement ohne Standfuß direkt auf einem Untergrund aufstellbar ist und aufgrund der gewählten Krümmung freistehend aufstellbar ist, wobei die Krümmung so gewählt ist, dass der Abstand zu einer Vertikalebene ausgehend von einem mittleren Bereich zu beiden Seiten des Halteelements hin zunimmt.
- Fig. 9: zeigt in einer schematischen Art und Weise die Verwendung eines einzigen oder mehrerer zusammenhängender Halteelemente zu einer großflächigen Halteeinrichtung, an welcher unterschiedliche Behälter eine Art Muster bilden.

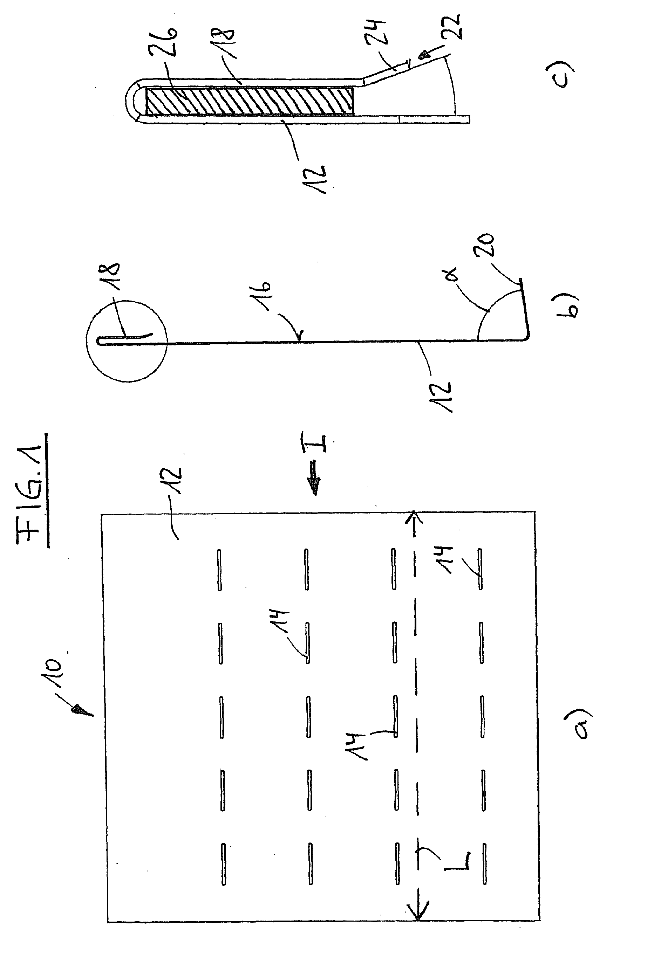

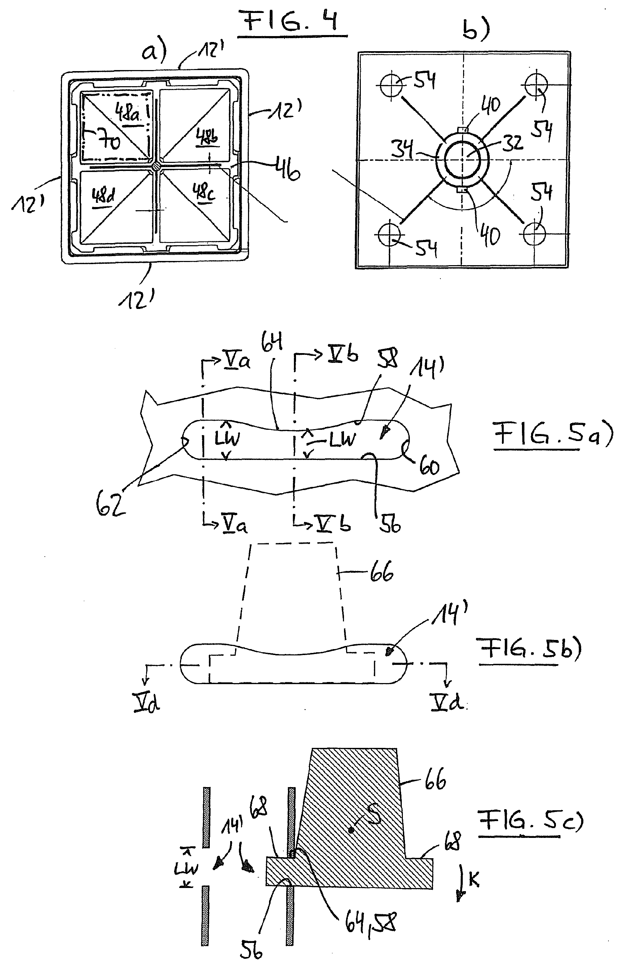

Eine in Fig. 1a) schematisch dargestellte Halteeinrichtung 10 umfasst ein Halteelement 12, in dem mehrere schlitzartige Öffnungen 14 ausgebildet sind, wobei in diese schlitzartigen Öffnungen 14 jeweils ein Kleinbehälter 66 (vgl. Fig. 5b)/c)) mit seinem Randvorsprung einführbar und festklemmbar ist.

Das Halteelement 12 in der Ausführungsform gemäß Fig. 1 ist eine im Wesentlichen quadratische ebene Fläche, wobei sie in ihrem oberen Bereich einen zur Hinterseite 16 umgebogenen Haken 18 aufweist, der an einer Schiene einhängbar ist, die an einer Wand angebracht ist. Ferner weist das Halteelement 12 an seinem unteren Ende einen nach hinten gebogenen Abstützabschnitt 20 auf, der in einem bestimmten Winkel α zum Halteelement 12 ausgerichtet ist, so dass ein gewünschter Abstand zu einer Wand eingehalten werden kann und die hängende Halteeinrichtung 10 beim Bedienen nicht in Richtung der Wand verschwenkt werden kann. Fig. 1c) zeigt eine Vergrößerung des Hakens 18, wobei der Haken an seinem unteren Ende 22 einen nach hinten geknickten Abschnitt 24 aufweist, welcher das Einführen des Hakens 18 in eine Schiene mit einem im Wesentlichen bandartigen Profil vereinfacht. Eine derartige Schiene zur Aufhängung der Halteeinrichtung 10 ist in der Fig. 1c) im Schnitt angedeutet und mit dem Bezugszeichen 26 versehen. Es ist noch anzumerken, dass sich der Haken 18 über die gesamte Länge L der Halteeinrichtung 10 bzw. des Halteelements 12 erstreckt. Eine Halteeinrichtung 10 kann auch Schraubdurchführungslöcher, etwa Langlöcher mit variierender Breite (nicht gezeigt) z. B. im Bereich 18 aufweisen, so dass sie mit herkömmlichen Schrauben an einer Wand befestigt werden kann.

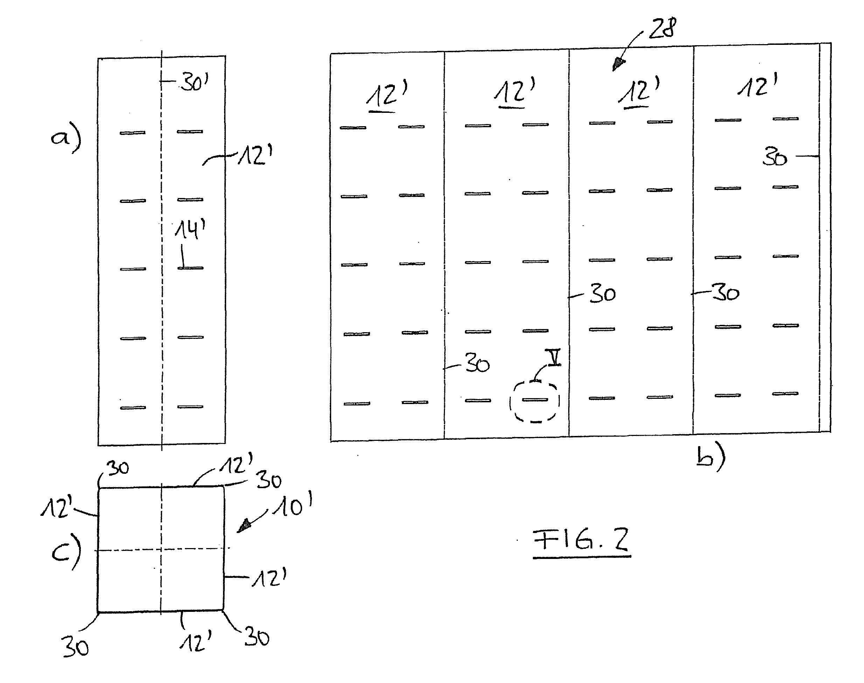

Fig. 2a) zeigt eine andere Ausführungsform eines Halteelements 12', in welchem zehn schlitzartige Öffnungen 14' vorgesehen sind. Das Halteelement 12' ist gemäß Fig. 2b) Teil eines Halteelementverbunds 28, in welchem vier gleichartige Halteelemente 12' einstückig nebeneinander angeordnet sind. Die in der Fig. 2b) strichpunktierten Linien zwischen zwei benachbarten Halteelementen 12' stellen Biegelinien 30 dar, entlang denen der Halteelementverbund 28 umgebogen wird, so dass eine in Draufsicht quadratische, rohrartig ausgebildete Halteeinrichtung 10' gemäß Fig. 2c) gebildet werden kann. Dabei sind jeweils zwei benachbarte Halteelemente 12' durch einen Biegebereich 30 voneinander getrennt und stehen im Wesentlichen rechtwinklig zueinander.

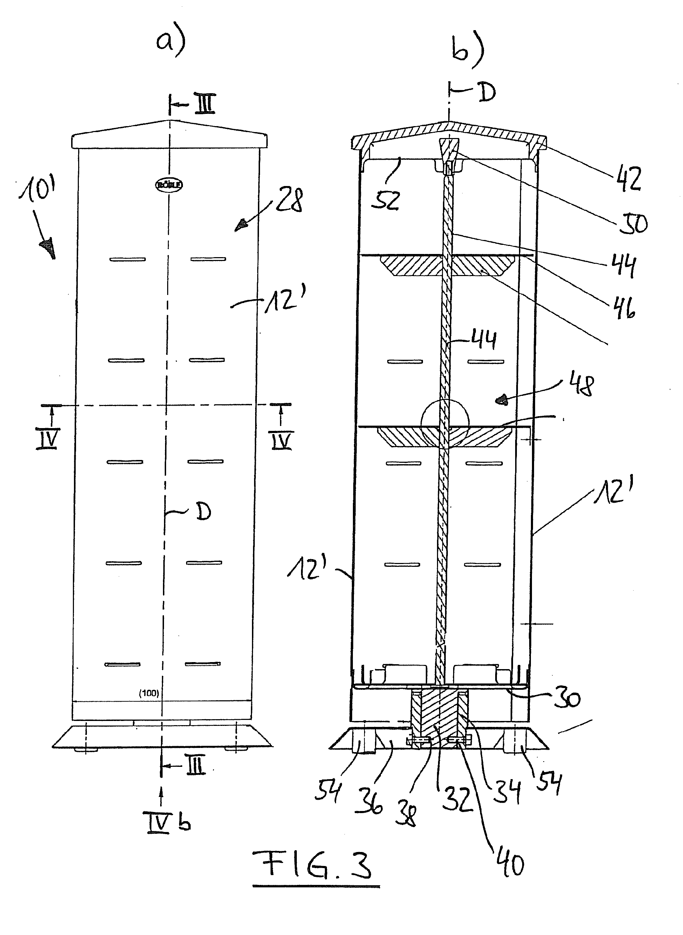

Ein gemäß Fig. 2c) umgebogener Halteelementverbund 28 kann als Halteeinrichtung 10' in Turmform gemäß der Darstellung in Fig. 3 verwendet werden. Dieser Halteturm 10' wird anhand der Draufsicht (Fig. 3a)) und der Schnittdarstellung gemäß Fig. 3b) erläutert. Der Halteturm 10' weist in seinem unteren Bereich eine Basis 30 auf, welche mit den Halteelementen 12' auf deren Innenseite verbunden ist. An dieser Basis 30 ist mittig ein Zapfen 32 angeordnet, welcher in eine Buchse 34 eines Sockels 36 aufgenommen ist. Der Zapfen 32 weist eine radiale Umfangsnut 38 auf, in welche Schrauben 40 eingreifen, um den Halteturm 10' in axialer Richtung auf dem Sockel 36 zu sichern, wobei eine Drehbewegung des Halteturms 10' um die Drehachse bzw. Längsachse D ermöglicht ist.

Der Halteturm 10', der von den vier Halteelementen 12' gebildet wird, ist an seinem oberen Ende durch einen Deckel 42 lösbar verschlossen, wobei der Deckel 42 bevorzugt über eine Art Schnappverbindung mit den Halteelementen 12' des Halteturms 10' in Verbindung steht.

Im Inneren des Halteturms 10' sind an einer Welle 44 befestigte kreuzartige Verstrebungen 46 vorgesehen, welche den Innenraum 48 in vier vertikal von oben zugängliche Innenraumabschnitte 48a bis 48d unterteilen. Dabei ist die Dimensionierung der Verstrebungen 46 derart gewählt, dass in den Freiräumen 48a bis 48d entlang der Drehachse D quaderförmige Vorratspackungen 70 für Kleinbehälter von der Deckelseite des Halteturms 10' eingeführt und wieder herausgenommen werden können. Die Welle 44 ist im unteren Bereich mit der Basis 30 derart verbunden, dass sie, die Verstrebungen 46 und ggf. aufgenommene Vorratspackungen gemeinsam mit den Halteelementen 12' um die Drehachse D relativ zum Sockel 36 verdrehbar sind. An ihrem oberen Ende ist die Welle 44 mittels einer Schraube 50 und einer weiteren Verstrebung 52 gesichert. Der Sockel 36, der in der Fig. 4b) in einer Draufsicht von unten schematisch dargestellt ist, weist rutschhemmende Standfüße 54 auf, um einen sicheren Stand auf einer Unterlage, insbesondere einem Tisch oder dgl., zu gewährleisten. Aus der Draufsicht gemäß der Fig. 4b) sind auch die den Zapfen 32 axial sichernden Schrauben 40 nochmals ersichtlich.

Fig. 5a) zeigt schematisch und stark vergrößert eine schlitzartige Öffnung 14 bzw. 14', beispielsweise die in Fig. 2b) mit V bezeichnete, gestrichelt umkreiste Öffnung 14'. Die Öffnung 14' wird von einem unteren Längsrand 56, einem oberen Längsrand 58 und zwei Seitenrändern 60, 62 begrenzt. Der untere Längsrand 56 verläuft im Wesentlichen horizontal, wohingegen der obere Rand 58 im mittleren Bereich einen konvex ausgebildeten Randabschnitt 64 aufweist, durch den die lichte Weite LW verringert wird. Bei einer derartig ausgestalteten Öffnung 14' nimmt die lichte Weite über die gesamte Länge der schlitzartigen Öffnung 14' vom Randbereich 60 zur Mitte hin ab und dann wieder zu bis zum Seitenrand 62. Der konvexe Randabschnitt 64 verbessert die Klemmwirkung des Schlitzes 14', wobei die lichte Weite der Öffnung 14' derart variiert, dass sowohl das Einführen als auch das Herausziehen eines Kleinbehälters mit seinem Randvorsprung einfach ist.

Fig. 5b) zeigt schematisch die Anordnung eines Kleinbehälters 66 in der Öffnung 14', wobei insbesondere aus der Schnittdarstellung der Fig. 5c) ersichtlich wird, dass ein Randvorsprung 68, welcher im vorliegenden Falle umlaufend ausgebildet ist, zwischen dem konvexen Randabschnitt 64 des oberen Längsrandes 58 und dem unteren Längsrand 56 festgeklemmt ist. Dabei wird beim Verklemmen der Behälter 66 etwas um den unteren Längsrand 56 nach unten verkippt (Kipppfeil K), so dass der Randvorsprung 68 mit dem konvexen Randabschnitt 64 in Berührung kommt und die gewünschte Klemmwirkung erzielt wird. Aus der Fig. 5c) ist ferner ersichtlich, dass die lichte Weite LW im Randbereich der Öffnung 14' größer ist als im zentralen Bereich mit dem konvexen Randabschnitt 64. Die Klemmwirkung ist erhöht, wenn der Kleinbehälter, wie dargestellt, so in der Öffnung angeordnet ist, dass sein Schwerpunkt S oberhalb der Öffnung 14' liegt.

Fig. 5d) zeigt eine Querschnittsansicht von oben auf die Öffnung 14' mit darin aufgenommenem Behälter 66 bzw. Randvorsprung 68.

Auch wenn der hier dargestellte Behälter 66 einen entlang dem Umfang des Behälters vollständig ausgebildeten Randvorsprung 68 aufweist, können in den schlitzartigen Öffnungen 14' bzw. 14 auch andere Behälter aufgenommen werden, welche einen nur abschnittsweise am Umfang des Behälters ausgebildeten Randvorsprung aufweisen. Dies ist insbesondere auch deshalb möglich, da der konvexe Randabschnitt 64 eine minimale lichte Weite genau in der Mitte der Öffnung 14' ausbildet, so dass eine eher punktuelle Klemmwirkung erreicht wird, die auch auf einen kleinen Randvorsprung anwendbar ist, so dass auch ein Behälter mit einem klein dimensionierten Randvorsprung in einer Öffnung 14, 14' einer Halteeinrichtung 10, 10' einführbar und festklemmbar ist, wie beispielsweise Zitronensaft- oder Kaffeesahneeinzelportionen, die jeweils eine Art Schnabelvorsprung mit geringer Ausdehnung in Umfangsrichtung aufweisen.

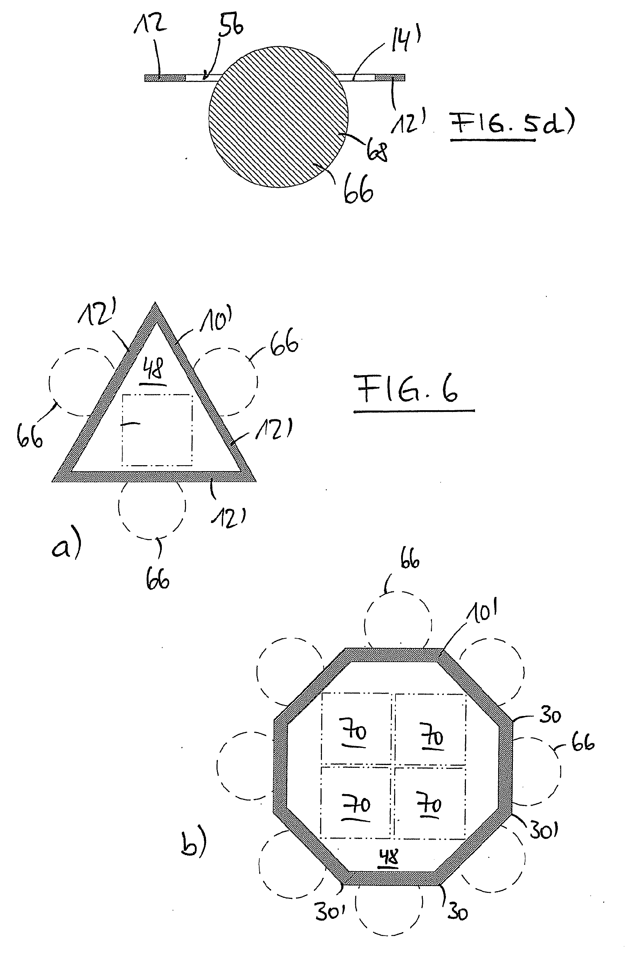

In der Fig. 6 sind in den Teilfiguren a) und b) weitere Alternativen einer rohrartigen Ausgestaltung der Halteeinrichtung 10' dargestellt. Dabei ist in Fig. 6a) ein dreieckiges Rohr dargestellt, das aus drei Halteelementen 12' besteht, an denen entsprechende Öffnungen 14' ausgebildet sind, in denen hier schematisch und gestrichelt Kleinbehälter 66 aufgenommen sind. Der Innenraum 48 dient der Aufnahme eines quaderförmigen Vorratspakets 70, in welchem weitere Kleinbehälter 66 aufgenommen sind, die keinen Platz in den Öffnungen 14' hatten.

Eine weitere Ausführungsform ist beispielhaft in Fig. 6b) dargestellt in Form eines Achtecks, wobei im Innenraum 48 Platz für vier Vorratspackungen 70 vorgesehen ist. Ein derartiges Achteck kann beispielsweise aus einem Halteelementverbund 28 gemäß Fig. 2b) hergestellt werden, wobei dann jedes Halteelement 12' noch entlang der in Fig. 2a) dargestellten Biegelinie 30' umgebogen werden muss.

Der Formengebung sind für derartige rohrartige, insbesondere als Turm zu verwendende Halteeinrichtungen 10' keine Grenzen gesetzt. Neben regelmäßigen Formen, wie gleichseitiges Dreieck, Quadrat, Achteck, sind auch Formen mit ungleich langen Seiten denkbar, beispielsweise Rechteck, rechtwinkliges Dreieck oder dgl., natürlich könnte der Turm auch kreisförmig oder oval ausgebildet sein.

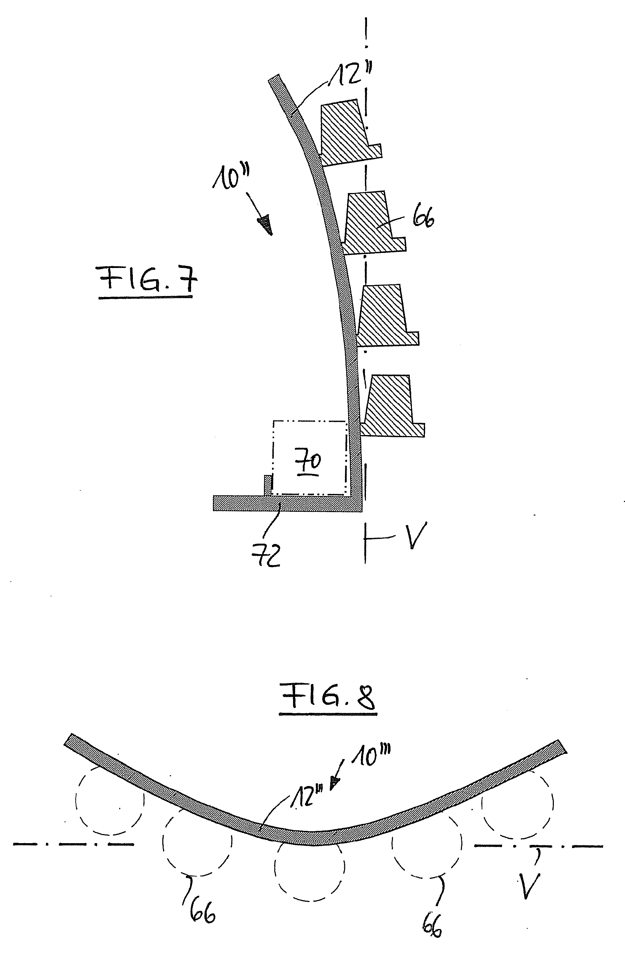

Fig. 7 zeigt eine weitere Ausführungsform einer Halteeinrichtung 10" in einer schematischen Querschnittsdarstellung, wobei die Halteeinrichtung 10" aus einem einzigen Halteelement 12" gebildet ist, das an seinem unteren Bereich einen nach hinten umgebogenen Standfuß 72 aufweist. Ausgehend vom Standfuß 72, der normalerweise auf einem horizontalen Untergrund, wie beispielsweise Tisch oder dgl., steht, erstreckt sich das Halteelement 12" als gekrümmte Fläche, wobei es mit zunehmender Höhe einen größeren Abstand von einer Vertikalebene V aufweist. Schematisch sind auch im Halteelement 12" in entsprechenden Öffnungen eingeführte Behälter 66 dargestellt. Ferner besteht auch bei einer derartigen Ausführungsform die Möglichkeit, eine Vorratspackung 70 versteckt unterzubringen, indem diese auf der Oberseite des Standfußes 72 auf der Rückseite des Halteelements 12' angeordnet wird. Vorzugsweise weist in einer derartigen Ausführungsform die Halteeinrichtung 10' eine Länge auf, die wenigstens der Länge einer Vorratspackung 70 entspricht, so dass die Vorratspackung seitlich nicht über die Halteeinrichtung 10' vorsteht.

Fig. 8 zeigt eine weitere Ausführungsform einer Halteeinrichtung 10"', wobei ein einziges Halteelement 12"' verwendet wird. Fig. 8 ist eine Schnittansicht in Draufsicht und das Halteelement 12"' ist entlang seiner Länge L ausgehend von einer Mitte zu beiden Seiten hin von einer Vertikalebene V weggekrümmt, so dass die beiden seitlichen Längsenden den größten Abstand zur Vertikalebene V aufweisen. Durch diese Formgebung des Halteelements 12"' ergibt sich eine in sich stabile Halteeinrichtung 10"', welche ohne Verwendung eines Standfußes oder Sockels direkt auf einer Unterlage aufgestellt werden kann. Angedeutet sind auch hier Behälter 66, welche in entsprechenden Öffnungen im Halteelement 12"' aufgenommen sind.

Auch wenn das Halteelement 12 bzw. 12' bevorzugt eine im Wesentlichen ebene Fläche aufweist, sind gekrümmte Ausführungsformen gemäß Fig. 7 und 8 durchaus denkbar, wobei auch eine doppelte Krümmung im Sinne einer Kombination der Fig. 7 und der Fig. 8 denkbar ist. Selbstverständlich ist es auch denkbar, dass aus mehreren gekrümmten bzw. gewölbten Halteelementen 12", 12"' rohr- oder turmartige Halteeinrichtungen hergestellt werden können. Selbstverständlich könnte die Krümmung der die Kleinbehälter 66 aufnehmenden Fläche auch konvex ausgebildet sein, was dann eine zur Fig. 8 gegenteilige Krümmung bedeuten würde.

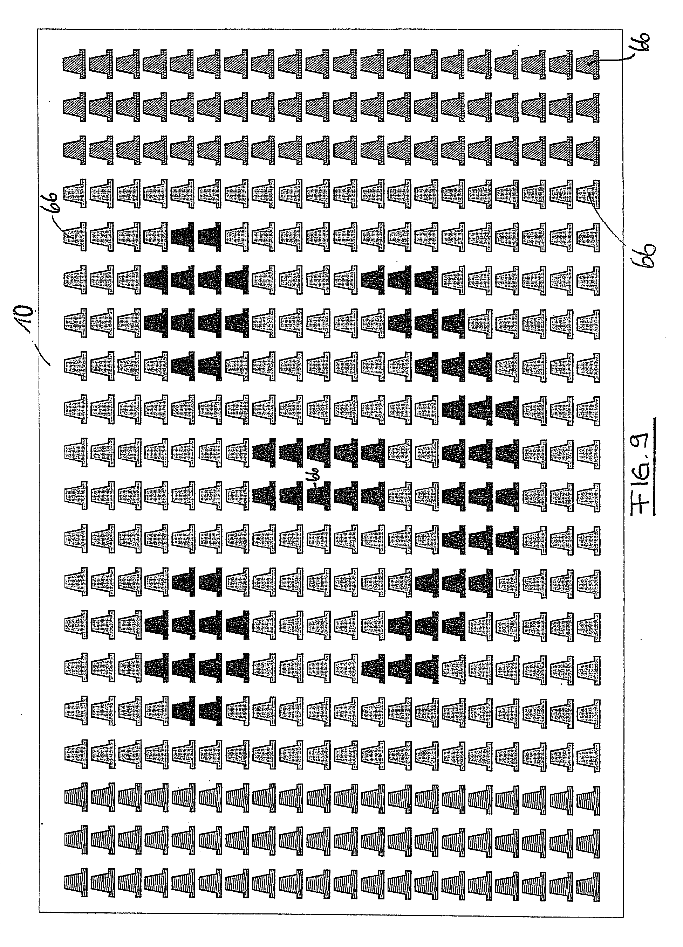

Wie bereits erwähnt, weisen die Halteelemente 12, 12' Zeilen und Spalten von Öffnungen 14, 14' auf, wobei die Anzahl der Zeilen n ist und die Anzahl der Spalten m ist. Ein Halteelementverbund 28 bzw. ein einzelnes Halteelement 12 können auch großformatig ausgebildet sein, beispielsweise in der Größenordnung von mehreren Dezimetern bis Metern, so dass eine Art Haltewand entsteht, wie sie in Fig. 9 schematisch angedeutet ist. Eine derartige Haltewand 10 weist beispielsweise 20 Zeilen und 20 Spalten von schlitzartigen Öffnungen auf, so dass an der Haltewand 10 insgesamt 400 Kleinbehälter 66 angeordnet werden können. Selbstverständlich kann jede beliebige Anzahl von Zeilen und Spalten ausgewählt werden. Eine derartige großflächige Ausgestaltung eines Halteelements 12 bzw. einer Halteeinrichtung 10 ermöglicht es, mittels der daran befestigten Kleinbehälter 66 Muster und Bilder anzuordnen, was insbesondere zu Werbezwecken ansprechend sein kann. Im Beispiel der Fig. 9 sind links und rechts jeweils drei Spalten zweier verschiedener Behältersorten mit unterschiedlichen Schraffuren dargestellt. Im mittleren Bereich sind hellgraue Behälter 66 angeordnet, und darin bilden schwarze Behälter eine Art Gesicht mit zwei Augen, Nase und Mund. Selbstverständlich können auch andere Grundformen als rechteckige für ein Halteelement 12 bzw. 12' verwendet werden, insbesondere könnte die Grundfläche eines Halteelements auch dreieckig, kreisförmig oder dgl. sein, je nach gewünschtem Anbringungsort und je nach verfügbarem Platz.

## Patentansprüche

1. Halteeinrichtung für Kleinbehälter (66) mit Randvorsprung (68), insbesondere für Getränkepulverkapseln, Kaffeesahneeinzelportionen, Zitronensafteinzelportionen und dergleichen, wobei die Halteeinrichtung (10, 10') wenigstens ein Halteelement (12, 12') umfasst mit wenigstens einer länglichen, schlitzartigen Öffnung (14, 14'), in welcher der Randvorsprung (68) eines betreffenden Kleinbehälters (66) wenigstens teilweise aufnehmbar ist, derart, dass ein in der Öffnung (14, 14') mittels seines Randvorsprungs (68) gehaltener Kleinbehälter (66) vom Halteelement (12, 12') vorsteht, wobei die schlitzartige Öffnung (14, 14') durch einen geschlossenen Öffnungsrand mit zwei sich gegenüberliegenden Längsrändern (56, 58) und zwei die beiden Längsränder (56, 58) verbindenden Seitenrändern (60, 62) begrenzt ist, **dadurch gekennzeichnet, dass** die beiden Längsränder (56, 58) der Öffnung (14, 14') wenigstens teilweise nicht parallel zueinander verlaufen, wobei wenigstens einer der Längsränder (56, 58) der Öffnung (14, 14'), vorzugsweise der obere Längsrand (58) bezogen auf ein aufgestelltes bzw. aufgehängtes Halteelement (12, 12'), wenigstens einen zur Öffnung (14, 14') hin konvex ausgebildeten Randabschnitt (64) aufweist, derart, dass durch den konvexen Randabschnitt (64) die lichte Weite (LW) der Öffnung (14') verringert wird, und dass die Längsränder (56, 58) eine klemmende Kraft auf den Randvorsprung (68) ausüben.

2. Halteeinrichtung nach Anspruch 1, wobei das Halteelement (12, 12') derart ausgestaltet ist, dass es aufhängbar oder aufstellbar ist, derart, dass eine die Öffnungen (14, 14') aufweisende Fläche des Halteelements (12, 12') zu einer horizontalen Ebene, insbesondere Aufstellebene, geneigt oder im Wesentlichen orthogonal angeordnet ist.

3. Halteeinrichtung nach Anspruch 1 oder 2, wobei die lichte Weite (LW) in einem mittleren Bereich der Öffnung (14') kleiner ist als in Randbereichen der Öffnung (14').

4. Halteeinrichtung nach einem der Ansprüche 1 bis 3, wobei mehrere schlitzartige Öffnungen (14, 14') insbesondere regelmäßig verteilt am Halteelement (12, 12') vorgesehen sind, vorzugsweise in der Art einer Matrix mit n Zeilen und m Spalten, wobei das Produkt von n und m der Anzahl Öffnungen im Halteelement entspricht.

5. Halteeinrichtung nach einem der vorhergehenden Ansprüche, wobei das Halteement (12) im Bereich seines oberen Randes Aufhängemittel (18) umfasst zum Befestigen der Halteeinrichtung (10) an einer Wand oder zum Einhängen der Halteeinrichtung in einer an der Wand bereits befestigten Aufhängschiene (26).

6. Halteeinrichtung nach Anspruch 5, wobei das Halteelement (12) an seinem unteren Randbereich einen Abstützabschnitt (20) aufweist zur Abstützung der aufgehängten Halteeinrichtung (10) an der Wand.

7. Halteeinrichtung nach Anspruch 5 oder 6, wobei die Aufhängemittel und der Abstützabschnitt (20) durch Umbiegen des Halteelements (12) gebildet sind.

8. Halteeinrichtung nach einem der Ansprüche 1 bis 4, wobei sie mehrere miteinander verbundene Halteelemente (12') umfasst, die derart zueinander ausgerichtet sind, dass die Halteeinrichtung (10') freistehend auf einem Untergrund, insbesondere Tisch oder dergleichen, aufstellbar ist.

9. Halteeinrichtung nach Anspruch 8, wobei die Halteelemente (12') als Teile eines einstückigen Halteelementverbunds (28) ausgebildet sind, der zu einer Halteeinrichtung (10') mit mehreren Halteelementen (12') umgebogen werden kann, derart, dass zwei Halteelemente (12') durch eine Biegekante (30) voneinander getrennt sind.

10. Halteeinrichtung nach Anspruch 8 oder 9, wobei die Halteeinrichtung wenigstens drei Halteelemente (12') umfasst, die derart zueinander angeordnet sind, dass eine rohrartige Halteeinrichtung (10') gebildet wird, wobei die Halteelemente (12') die Begrenzungswände des Rohres bilden und wobei ein Kleinbehälter (66) von der Rohraußenseite her in eine Öffnung (14') in einem der Halteelemente einführbar ist.

11. Halteeinrichtung nach Anspruch 10, wobei sie vier Halteelemente (12') umfasst, von denen immer zwei benachbarte im rechten Winkel zueinander angeordnet sind, derart, dass die vier Halteelemente (12') eine im Querschnitt rechteckige, vorzugsweise quadratische, rohrartige Halteeinrichtung (10') bilden.

12. Halteeinrichtung nach Anspruch 10 oder 11, wobei die rohrartig ausgebildete Halteeinrichtung (10') an ihrem unteren Ende eine Basis (30) umfasst, mit der sie um die Rohrlängsachse (D) drehbar mit einem zugehörigen Standfuß (36) gekoppelt oder koppelbar ist, derart, dass das Rohr einen auf der Basis (30) stehenden und relativ zum Standfuß (36) drehbaren Halteturm (10') bildet.

13. Halteeinrichtung nach Anspruch 12, wobei die Halteelemente (12') der rohrartigen Halteeinrichtung derart dimensioniert sind, dass im Halteturm (10') wenigstens eine vorzugsweise quaderartige Kleinbehältervorratspackung (70) aufnehmbar ist.

14. Halteeinrichtung nach Anspruch 12 oder 13, wobei der Halteturm (10') an seinem oberen von der Basis (30) abgewandten Ende einen abnehmbaren Verschluss, vorzugsweise Deckel (42) aufweist.

15. Halteeinrichtung nach einem der vorhergehenden Ansprüche, wobei das Halteelement (12, 12') als im Wesentlichen ebene Fläche (12, 12') oder als gekrümmte bzw. gewölbte Fläche (12", 12"') ausgeführt ist.

16. Präsentationsanordnung umfassend eine Kombination aus einer Halteeinrichtung, insbesondere nach einem der vorhergehenden Ansprüche, und einer Vielzahl von Kleinbehältern (66) mit Randvorsprung, insbesondere für Getränkepulverkapseln und dergleichen,
wobei die Halteeinrichtung (10, 10') wenigstens ein Halteelement (12, 12') umfasst mit einer Vielzahl von länglichen, schlitzartigen Öffnungen (14, 14'), wobei die Kleinbehälter (66) mit ihren Randvorsprüngen (68) in den schlitzartigen Öffnungen (14, 14') hängend aufgenommen sind, derart, dass sie vom Halteelement nach außen vorstehen.
